# EUROPÄISCHE PATENTSCHRIFT

(11) **EP 3 075 239 B1**
(45) Veröffentlichungstag und Bekanntmachung des Hinweises auf die Patenterteilung: **26.06.2019**
(21) Anmeldenummer: 16161083.7
(22) Anmeldetag: 18.03.2016
(51) Int. Cl.: A01K 1/00, A01K 1/02

(54) **TIERUNTERKUNFT**
ANIMAL SHELTER
ABRI POUR ANIMAUX

(30) Priorität: 20.03.2015 DE 202015101447 U
(43) Veröffentlichungstag der Anmeldung: 05.10.2016
(73) Patentinhaber: Wahl Besitz GbR (vertretungsberechtigter Gesellschafter Herr Jürgen Wahl), 87463 Dietmannsried (DE)
(72) Erfinder: Wahl, Jürgen, 87463 Dietmannsried (DE)
(74) Vertreter: Pfister & Pfister Patent- und Rechtsanwälte

(56) Entgegenhaltungen:
- WO-A1-90/11009
- WO-A1-2008/043155
- DE-A1- 2 841 939
- US-A- 4 462 334
- US-A- 5 975 025
- US-A1- 2009 031 963
- US-A1- 2013 276 716

## Beschreibung

Die Erfindung betrifft eine Tierunterkunft, insbesondere ein Kälberiglu, sowie eine Anordnung umfassend mehrere derartige Tierunterkünfte; siehe z.B. US 2009/0031963 A1.

Derartige Tierunterkünfte finden bei der Aufzucht von Tieren, wie z.B. Kälbern, Lämmern oder sonstigen landwirtschaftlichen Nutztieren Verwendung. Nach der Geburt werden die landwirtschaftlichen Nutztiere in der Regel von den Elterntieren getrennt und in Einzelhaltung aufgezogen. Hierzu werden die Jungtiere in entsprechenden Unterkünften vereinzelt. Die Tierunterkunft schützt das Jungtier vor Witterungseinflüssen und Infektionen durch weitere Jungtiere bzw. die Alttiere oder Herde. Insbesondere in der Übergangszeit, d.h. im Frühjahr oder Herbst ergibt sich bei der Außenhaltung das Risiko von Unterkühlung, da bekannte Tierunterkünfte in der Regel nur schlecht bis nicht isoliert sind. Der Versuch dieses Problem durch beheizte Bodenflächen zu lösen, hat sich als nachteilig erwiesen, da die Bodenfläche in der Regel durch ein Streumaterial bedeckt oder mit tierischen Fäkalien beschmutzt ist. Durch den Eintrag von Wärme wird hier ein Nährboden für Keime geschaffen, was sich wiederum nachteilig auf die Tiergesundheit auswirkt.

Aus WO 2008/043155 A1 ist eine Vorrichtung zum Wärmen von Tieren bekannt, bei der ein mit warmer Luft durchflossener Schlauch an der Wand der Vorrichtung angeordnet ist. Die Erwärmung des Tieres im Inneren der Vorrichtung erfolgt dabei entweder durch Berührung des erwärmten Schlauches oder durch Anblasen des Tieres mit warmer Luft.

Aufgabe der vorliegenden Erfindung ist es, eine Tierunterkunft zur Verfügung zu stellen, die eine tiergerechte Aufzucht von, insbesondere Jungtieren ermöglicht.

Diese Aufgabe wird gelöst durch eine Tierunterkunft mit den Merkmalen des Anspruchs 1 und eine Anordnung mehrerer Tierunterkünfte gemäß Anspruch 12. Vorteilhafte Weiterbildungen sind Gegenstand der abhängigen Ansprüche.

Erfindungsgemäß wird eine Tierunterkunft zur Verfügung gestellt, die in der Regel auch als Kälberiglu bezeichnet wird, ohne die Verwendung auf Kälber zu beschränken. Ebenfalls denkbar ist die Unterbringung von Lämmern, Fohlen oder Ferkeln sowie sonstigen Tieren, bevorzugt landwirtschaftlichen Nutztieren. Die Tierunterkunft verfügt dabei über einen Unterkunftsraum für wenigstens ein Tier sowie eine den Unterkunftsraum zumindest teilweise umschließende Wandung. Die Tierunterkunft zeichnet sich dadurch aus, dass in oder an der Wandung wenigstens eine Temperiervorrichtung für die Tierunterkunft vorgesehen ist. Die Temperiervorrichtung dient dabei dazu, eine für das Tier angenehme Temperatur im Inneren der Tierunterkunft zu schaffen. Der Begriff Temperierung wird gleichwohl für die Beheizung wie auch für eine Kühlung der Tierunterkunft verwendet. Bevorzugt ist die Temperiervorrichtung als von einem Kühl- und oder Heizmedium durchflossener Heizkörper oder eine durchflossene Heizmatte ausgebildet. Alternativ oder zusätzlich hierzu ist wenigstens eine Leitung für das Kühl- und/oder Heizmedium als Temperiervorrichtung in der Tierunterkunft angeordnet oder anordenbar.

Als Kühl- und/oder Heizmedium im Sinne de Erfindung ist bevorzugt elektrischer Strom vorgesehen.

Die Unterbringung der Temperiervorrichtung an oder in der Wandung umgeht das Problem, eine beheizbare Auflagefläche für das Tier zur Verfügung zu stellen, die die oben genannten Nachteile mit sich bringt. Gleichwohl umfasst die Erfindung auch Ausführungsformen der Tierunterkunft, bei der sich die Temperiervorrichtung im Bodenbereich befindet oder sich zumindest teilweise in diesen erstreckt und eine beheizte Auflagefläche für das Tier zur Verfügung stellt.

Durch die an oder in der Wandung angebrachte Temperiervorrichtung kann einerseits eine beheizte bzw. gekühlte Wand geschaffen werden, die dann die gesamte Tierunterkunft entsprechend temperiert. Alternativ, aber nicht gemäß der Erfindung, kann insbesondere über die Leitungen ein Kühl- oder Heizmedium, bevorzugt warme oder kalte Luft in die Tierunterkunft eingeblasen werden, um diese hierüber zu temperieren. In jeder Ausführungsform wird somit eine Tierunterkunft zur Verfügung gestellt, die die ganzjährige Unterbringung von Jungtieren außerhalb des Stalles, das heißt im Freien ermöglicht, ohne die Gefahr von Überhitzung oder Unterkühlung der Tiere in Kauf nehmen zu müssen.

Während die Tierunterkunft insgesamt aus einem starren Material, bevorzugt Kunststoff oder faserverstärktem Kunststoff gebildet ist, kann die Temperiervorrichtung aus einem flexiblen Material gebildet werden.

Als vorteilhaft, aber nicht gemäß der Erfindung, hat sich erwiesen, wenn als Kühl- und/oder Heizmedium Luft vorgesehen ist. In dieser Ausführungsform ist des Weiteren vorgesehen, dass in der Leitung wenigstens eine auf den Unterkunftsraum ausgerichtete Luftaustrittsöffnung vorhanden ist, um die temperierte Luft in den Unterkunftsraum oder direkt auf das dort eingestellte Tier einzublasen.

Die Temperiervorrichtung ist erfindungsgemäß als Infrarotstrahler, Infrarotflächenheizung oder Infrarotheizmatte ausgebildet. Insbesondere die Ausgestaltung als Infrarotheizmatte erlaubt es die Tierunterkunft in einfacher Art und Weise und flächenmäßig definierbarem Umfang mit der Temperiervorrichtung auszurüsten, beispielsweise bereichsweise auszukleiden.

Neben Infrarotstrahlern, Infrarotflächenheizungen oder Infrarotheizmatten können auch herkömmliche Heizstrahler vorgesehen werden. Deren Verwendung ist somit auch von der Erfindung umfasst.

Als günstig angesehen wird, wenn sich die Temperiervorrichtung in Längsrichtung des Unterkunftsraumes erstreckt. Es kann hierdurch eine Versorgung des gesamten Unterkunftsraumes und des sich darin bewegenden Tieres mit Wärme oder Kühlung erreicht werden. Außerdem wird so eine gleichmäßige Temperierung der Unterkunft sichergestellt.

Erfindungsgemäß überspannt oder umschließt die Wandung den Unterkunftsraum kuppel- oder gewölbeartig. Hieraus ergibt sich die jeweilige geometrische Ausgestaltung der Tierunterkunft als Box, Halbkugel, zumindest einseitig abgeschlossenes Gewölbe oder in sonstiger Form. Die gewählte Form beeinflusst auch die Luftzirkulation innerhalb der Tierunterkunft und hat somit entscheidenden Einfluss auf die gleichmäßige Temperaturverteilung.

In dem kuppel- oder gewölbeartig ausgebildeten Dachbereich besteht auch die Möglichkeit die Temperiervorrichtung anzuordnen und die Beheizung bzw. Kühlung von der Decke her vorzunehmen. Dies erweist sich insbesondere dann als vorteilhaft, wenn als Temperiervorrichtung ein Infrarotstrahler bzw. eine Infrarotflächenheizung oder Infrarotheizmatte vorgesehen ist. Die Infrarotflächenheizung oder Infrarotheizmatte erwärmt vorrangig das Tier und nur in nachrangigem Umfang die umgebende Luft, sodass eine effizientere und gezieltere Erwärmung, beispielsweise auch vom Dachbereich her möglich wird.

Die Temperiervorrichtung kann dabei sowohl vollflächig als auch abschnitts- oder bereichsweise an oder in der Wandung angeordnet werden. Hierdurch kann auf die jeweils gewählte Geometrie der Tierunterkunft eingegangen werden.

Die Temperiervorrichtung kann unmittelbar bei der Herstellung der Tierunterkunft in dieser angeordnet werden. Erfindungsgemäß vorgesehen ist, dass die Temperiervorrichtung auf der Wandung aufgebracht ist. Es besteht die Möglichkeit der Anordnung durch Aufkleben der Temperiervorrichtung auf der Wandung bzw. Innenwand oder - haut der Tierunterkunft. Erfindungsgemäß kann alternativ die Temperiervorrichtung, abhängig von deren letztlichen Ausgestaltung auch ganz oder teilweise in ein die Wandung bzw. die Tierunterkunft bildendes Material eingebettet oder eingegossen werden. Selbstverständlich besteht auch die Möglichkeit, dass auf der Wandung bzw. Innenhaut der Tierunterkunft zusätzlich ein beschichtendes Material aufgebracht wird, in das dann die Temperiervorrichtung eingebettet oder eingegossen wird.

Neben der Einbettung der Temperiervorrichtung in der Wandung kann selbst verständlich auch an oder in der Wandung eine Aufnahme für die Temperiervorrichtung vorgesehen werden.

Erfindungsgemäß ist vorgesehen, dass in der Wandung wenigstens eine Zutrittsöffnung zu dem Unterkunftsraum ausgespart ist. Die gesamte Tierunterkunft kann so als ein Teil hergestellt werden, was sich wiederum günstig auf die Herstellungszeiten und -kosten auswirkt.

Als vorteilhaft erweist sich eine doppelwandige Ausgestaltung der Tierunterkunft, da so in der Wandung ein Aufnahmeraum für die Leitung geschaffen werden kann. Die Wandung weist in dieser Ausführungsform eine Außen- und eine dazu beabstandete Innenhaut auf. In dem sich dadurch ergebenden Zwischenraum zwischen Außen- und Innenhaut ist dann die Leitung angeordnet. In einer als günstig angesehenen Weiterbildung ist die Luftaustrittsöffnung in der Innenhaut vorgesehen.

Eine bevorzugte Ausführungsform sieht vor, dass die Leitung in die Wandung eingeformt ist. Dabei kann die Leitung aus dem Material der Wandung beim Herstellungsprozess der Tierunterkunft gebildet werden. Hierbei können dann beispielsweise röhren- oder schlauchförmige Abschnitte ausgebildet werden, die dann von dem Heiz- oder Kühlmedium durchströmt werden. Alternativ hierzu ist es selbstverständlich auch möglich, dass die Leitung nachträglich in der Wandung eingeformt bzw. in sonstiger Art und Weise in diese eingebracht wird.

Als günstig wird angesehen, wenn die Leitung als Schlauch ausgebildet ist und die Luftaustrittsöffnung durch Perforation des Schlauches und/oder Einsatz eines Düsenkörpers in den Schlauch gebildet ist. In dieser Variante der Tierunterkunft kann eine Temperierung in einfacher Art und Weise auch nachträglich eingebaut werden. Der mit Löchern versehene Schlauch wird im Innern der Tierunterkunft angeordnet bzw. mit der Wandung ver bunden. Aus den Löchern tritt dann die warme bzw. kalte Luft aus und bewirkt eine Temperierung der Unterkunft. Eine weitere Verbes serung des Luftaustritts kann erreicht werden, indem ein Düsenkörper, beispielsweise ein Röhrchen oder ein düsenartiges Formteil in dem Schlauch eingesetzt wird/ist. Über die Düse kann dann eine Ausrichtung des Luftstroms vorgenommen werden, um eine noch bessere und gleichmäßigere Temperierung der Unterkunft zu erreichen.

In einer vorteilhaften Weiterbildung der Erfindung ist vorgesehen, dass die Wandung wenigstens eine Halterung für die Anordnung der Temperiervorrichtung aufweist. In diesem Zusammenhang erweist sich als günstig, wenn die Halterung in die Wandung eingeformt, in diese eingesetzt, auf dieser aufgesetzt, in dieser eingesteckt oder auf diese aufgesteckt, in dieser eingeschraubt oder auf dieses aufgeklebt vorgesehen ist. Es wird somit eine Möglichkeit zur Nachrüstung bestehender Tierunterkünfte zur Verfügung gestellt.

Bevorzugt ist die Halterung dabei für eine nur bedarfsweise Anordnung der Temperiervorrichtung vorgesehen. Die Temperiervorrichtung kann somit beispielsweise bei entsprechenden Witterungsverhältnissen entnommen oder kurzfristig eingebaut werden.

Als günstig wird angesehen, wenn ein den Unterkunftsraum rückseitig begrenzender, die Temperiervorrichtung aufweisender Wandungsteil vorgesehen ist. Somit kann nicht nur seitlich Wärme bzw. das Heiz- oder Kühlmedium aus der Wandung austreten und so insgesamt eine verbesserte Temperierung erreicht werden.

Die Tierunterkunft zeichnet sich in einer weiteren bevorzugten Ausführungsform dadurch aus, dass die Wandung eine Dach- und wenigstens eine Seitenfläche der Tierunterkunft ausbildet und die Temperiervorrichtung auch in der Dach- und/oder der wenigstens einen Seitenfläche angeordnet ist. Somit kann Wärme bzw ein Heiz- bzw. Kühlmedium von allen Seiten in die Tierunterkunft eingebracht, werden. Die Temperierung wird hierdurch weiter vergleichmäßigt und somit verbessert.

Um das Einbringen der Wärme bzw. des Heiz- bzw. Kühlmediums zu vereinfachen, ist eine zentrale Einspeisung für das Kühl- und/oder Heizmedium vorgesehen. Ist als Heizmedium elektrischer Strom vorgesehen, so weist die Tierunterkunft bevorzugt einen Anschluss für die Verbindung mit dem Stromnetz auf. Bis Verbindung kann als speziell abgesicherter, an die Umgebungsbedingungen angepasster Stecker ausgebildet sein.

Zuvor wurde die erfindungsgemäße Tierunterkunft ausgehend von einer einzigen Temperiervorrichtung beschrieben. Selbstverständlich bleibt die Erfindung nicht auf diese Ausführungsform beschränkt, sondern umfasst auch Tierunterkünfte mit zwei oder mehr zueinander beabstandet angeordneten Temperiervorrichtungen in oder an der Wandung.

In diesem Zusammenhang erweist es sich als vorteilhaft, wenn eine zentrale Stromversorgung oder Einspeisung für das Kühl- oder Heizmedium vorgesehen ist und die Temperiervorrichtung mit dieser zentralen Stromversorgung bzw. Einspeisung verbindbar ist/sind.

Als günstig wird dabei angesehen, wenn in der Wandung ein mit der Leitung oder den Leitungen verbundenes oder verbindbares Verteilerelement für das Kühl- und/oder Heizmedium vorgesehen ist. Über das Verteilerelement kann auch die Abgabe des Heiz- oder Kühlmediums in die Leitungen bzw. die Temperiervorrichtung gesteuert werden. Hierdurch wird eine bedarfsweise Temperaturregulierung ermöglicht.

Eine als vorteilhaft angesehene Weiterbildung der Tierunterkunft sieht eine sich an die Wandung anschließende oder anschließbare Bodenfläche vor, wobei in der Bodenfläche bevorzugt eine oder mehrere Leitungen für das Kühl- und/oder Heizmedium vorgesehen ist/sind. Die Leitungen sind in der Bodenfläche bevorzugt an deren Rand, das heißt im Übergangsbereich zwischen Wandung und Bodenfläche angebracht, um eine Verschmutzung zu verhindern bzw. zu reduzieren. Als vorteilhaft wird angesehen, wenn in der Tierunterkunft in dieser Ausführungsform die Bodenfläche doppelwandig oder rost- oder gitterartig ausgebildet ist.

Bevorzugt weist die Tierunterkunft eine insbesondere manuell oder fernbedient einstellbare, bevorzugt automatische Temperaturregeleinrichtung auf. Über die Temperaturregeleinrichtung kann, basierend auf beispielsweise den durch einen Temperatur- oder Feuchtesensor erfassten Werten, eine insbesondere automatische Temperaturregulierung oder Klimatisierung der Tierunterkunft durchgeführt werden.

Die Erfindung umfasst auch eine Anordnung umfassend mehrere Tierunterkünfte, wie zuvor beschrieben. Hierdurch wird die gleichzeitige Haltung und Aufzucht mehrerer Tiere unter gleichen Bedingungen ermöglicht. Zudem ist sichergestellt, dass in allen Tierunterkünften die gleichen, tiergerechten Umweltbedingungen herrschen.

Als vorteilhaft wird angesehen, wenn in der Anordnung jeder Tierunterkunft eine Versorgungseinheit für das Kühl- und/oder Heizmedium zugeordnet ist.

Als günstig wird alternativ angesehen, wenn eine zentrale Versorgungseinheit für die gleichzeitige Versorgung aller Tierunterkünfte mit dem Kühl- und/oder Heizmedium vorgesehen ist. Bevorzugt weist die Anordnung dann auch eine zentrale Temperaturregeleinrichtung auf.

In der Zeichnung ist die Erfindung insbesondere in einem Ausführungsbeispiel schematisch dargestellt. Es zeigen:
- Fig. 1: eine Ausführungsform einer nicht erfindungsgemäßen Tierunterkunft in perspektivischer Darstellung,
- Fig. 2: eine Detailansicht der Wandung,
- Fig. 3: eine weitere Detailansicht der Wandung,
- Fig. 4: eine Rückansicht der Tierunterkunft,
- Fig. 5a: eine Ausführungsform der erfindungsgemäßen Tierunterkunft in perspektivischer Darstellung,
- Fig. 5b: die Ausführungsform gemäß Fig. 5a in Seitenansicht,
- Fig. 6a: eine weitere Ausführungsform der erfindungsgemäßen Tierunterkunft in perspektivischer Darstellung,
- Fig. 6b: die Ausführungsform gemäß Fig. 6a in Seitenansicht,

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

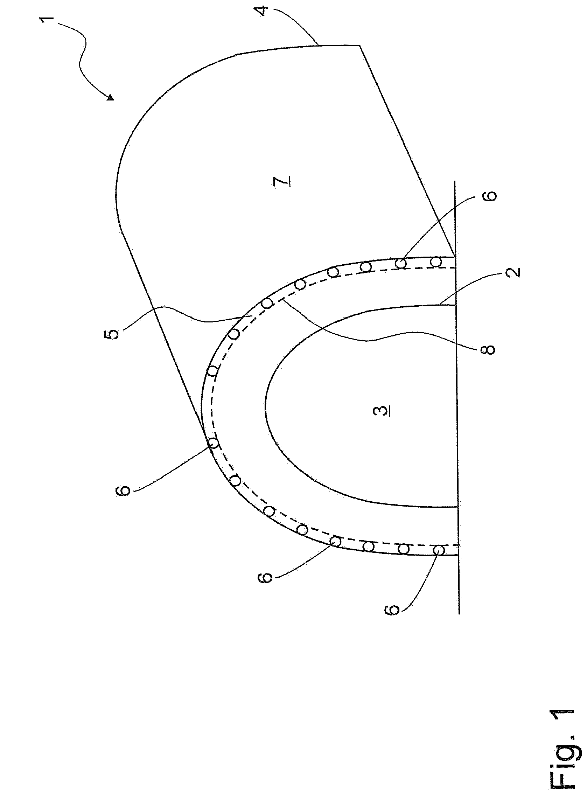

Figur 1 zeigt eine als Kälberiglu ausgebildete, nicht erfindungsgemäße Tierunterkunft 1. Die Tierunterkunft 1 ist dabei gewölbe- oder boxartig ausgebildet und verfügt über eine Zutrittsöffnung 2, über die Zugang zu dem im Innern der Tierunterkunft 1 vorgesehenen Unterkunftsraum 3 möglich ist. Im Unterkunftsraum 3 hält sich in der Regel das untergebrachte Tier auf. Dieser Raum wird durch die Wandung 4 der Tierunterkunft 1 gebildet und ist im Ausführungsbeispiel doppelwandig ausgebildet.

Bei der doppelwandigen Ausgestaltung der Tierunterkunft ist in der Wandung 4 ein Zwischenraum 5 für die Leitung 6 geschaffen. Die Wandung 4 weist eine Außenhaut 7 und eine dazu beabstandete Innenhaut 8 auf. In der Innenhaut 8 können Luftaustrittsöffnungen 20 vorgesehen werden.

Der Zwischenraum 5 bzw. Abstand zwischen Außenhaut 7 und Innenhaut 8 wird durch den Außendurchmesser der Leitungen 6 definiert. Im Ausführungsbeispiel der Figur 1 sind mehrere Leitungen 6 vorgesehen, die sich jeweils über die gesamte Länge der Tierunterkunft 1 erstrecken und gleichmäßig verteilt an deren Umfang angeordnet sind. Es ist dabei nicht zwingend notwendig, dass die Leitungen 6 bzw. die Innenhaut 8 mit Luftaustrittsöffnungen 20 versehen sind, es kann gleichermaßen eine Erwärmung der Tierunterkunft 1 über durch die Leitungen 6 strömendes Heizmedium durchgeführt werden. Als Wärmeträger kann in diesem Fall dann auch erwärmtes Wasser oder eine Wärmeträgerflüssigkeit verwendet werden.

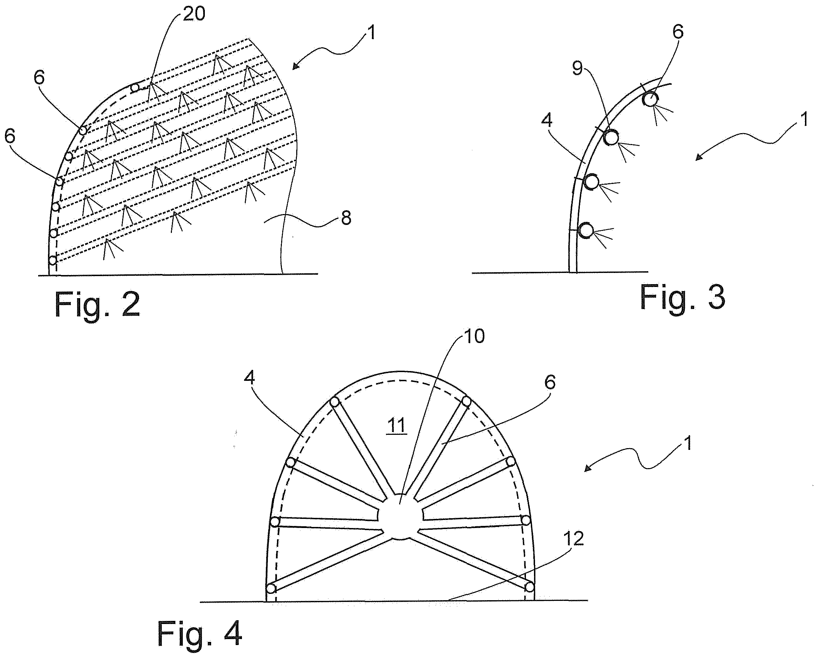

Figur 2 zeigt einen Ausschnitt der Innenhaut 8, die mehrere mit den Leitungen 6 in Verbindung stehende Luftaustrittsöffnungen 20 aufweist. Diese Luftaustrittsöffnungen 20 sind gleichmäßig über die gesamte Innenhaut 8 verteilt und sorgen für eine gleichmäßige Verteilung der Luft im Inneren der Tierunterkunft 1. Die Leitungen 6 können nachträglich in die Wandung 4 eingezogen oder in diese bei der Herstellung eingeformt werden. Die in Figur 2 gezeigte Ausführungsform verfügt aufgrund der Anordnung der Leitungen 6 in der Wandung 4 über eine glatte Innenhaut 8, die lediglich durch die mit den Leitungen 6 in Verbindung stehenden Luftaustrittsöffnungen 20 unterbrochen ist. Eine Alternative zu dieser Anordnung zeigt Figur 3. Hier sind Halterungen 9 vorgesehen, die die Leitungen 6 umgreifen und ihrerseits wiederum in die Wandung 4 eingesetzt sind. Eine derartige Ausgestaltung ermöglicht auch eine nachträgliche Anordnung der Leitungen 6 und somit die Temperierung der Tierunterkunft 1.

Figur 4 zeigt die rückseitige Ansicht der Tierunterkunft 1. Erkennbar ist hier ein Verteilerelement 10, in das die Leitungen 6 münden. Die Leitungen 6 erstrecken sich sternförmig über die Rückseite 11 der Tierunterkunft und von dort in die Wandung 4. Über das Verteilerelement 10 kann das Heizmedium in die Tierunterkunft 1 eingebracht werden. Das Verteilerelement 10 weist hierzu beispielsweise eine Kupplung zur Verbindung mit einem Gebläse auf. Die über das Verteilerelement 10 eingeblasene Luft wird über die Leitungen 6 gleichmäßig in der Tierunterkunft 1 verteilt und erlaubt es somit ein dort untergebrachtes Tier zu wärmen.

Durch die Anordnung der Leitungen und das Einblasen von Warmluft über die Wandung 4 kann eine gleichmäßige Temperierung der Tierunterkunft 1 erreicht werden, ohne eine Beheizung über die Bodenfläche 12 durchführen zu müssen. Da die Luftaustrittsöffnungen 20 au-ßerhalb des Liegebereichs der Tiere angeordnet sind, kommt es hier nicht zu Verschmutzungen und Verstopfungen, sodass eine kontinuierliche Zuführung von Warmluft gewährleistet ist.

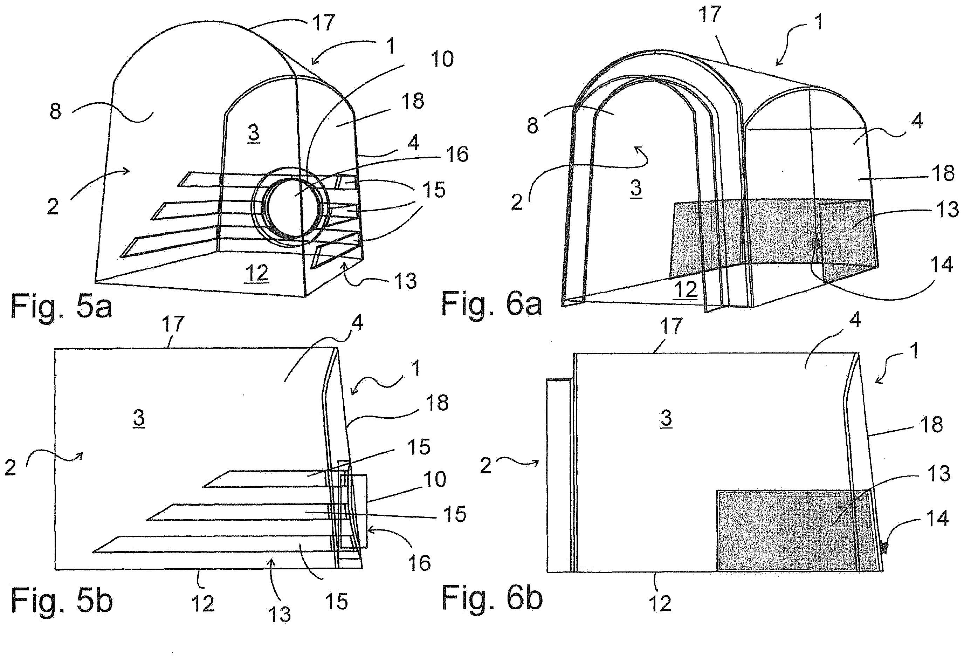

Die Figuren 5a und 5b zeigen eine bevorzugte Ausführungsform der erfindungsgemäßen Tierunterkunft 1. Diese hier dargestellte Ausführungsform weist keine Querschnittsverkleinerung im Bereich der Zutrittsöffnung 2 auf. Die Temperiervorrichtung 13, die im Ausführungsbeispiel vorgesehen ist, ist streifenartig in einem Bereich der Rückwand 18 sowie der Innenhaut 8 angeordnet. Bei den hier gezeigten Abschnitten 15 der Temperiervorrichtung 13 handelt es sich um eine auf der Innenhaut 8 aufgebrachte bzw. leicht, d.h. wenige Millimeter oder tiefer in die Wandung eingesenkte Infrarotflächenheizung. Gleichwohl besteht selbstverständlich auch die Möglichkeit, dass die gezeigten Abschnitte 15 als Leitungen 6 ausgebildet sind, die zirkulierendes Heizmedium, beispielsweise Öl oder (Warm)Wasser führen oder der Zufuhr von Luft als Heiz-oder Kühlmedium dienen.

In der Rückwand 18 ist eine zentrales Verteilerelement 10 vorgesehen, über das nach Anschluss an eine entsprechende Medienquelle, beispielsweise ein Stromaggregat oder ein Gebläse, je nach Ausgestaltung der Temperiervorrichtung 13, dass Kühl- oder Heizmedium bzw. der elektrische Strom in die Temperiervorrichtung 13 eingebracht wird. Das zentrale Verteilerelement 10 weist hierzu eine Öffnung 16 zum Anschluss und zur Medienzufuhr auf.

Die in den Figuren 5a und 5b dargestellte Ausführungsform der Tierunterkunft 1 stellt die einfachste Variante dar. Der Dachbereich 17 ist kuppelartig ausgebildet und definiert letztlich die Standhöhe in der Tierunterkunft 1. Der dargestellte Körper ist als ein Teil hergestellt und verfügt neben dem Dachbereich 17 der Rückwand 18 und der seitlichen Wandung 4 über eine Bodenfläche 12, die als Standfläche für das untergebrachte Tier dient. Die Temperiervorrichtung 13 wurde im Laufe der Herstellung der Tierunterkunft 1 in dieser eingebracht. Die Anordnung der Temperiervorrichtung 13 kann beispielsweise bei der Herstellung der Wandung 4 der Tierunterkunft 1 in diese eingeformt oder eingelegt werden. Selbstverständlich besteht auch die Möglichkeit, dass die Temperiervorrichtung 13 mit dem Material der Wandung 4 umspritzt oder umgossen wird. Auch ein nachträglicher Einbau ist möglich. Hierzu verfügt die Tierunterkunft dann über entsprechende auf oder in der Innenhaut 8 bzw. im Unterkunftsraum 3 vorgesehene Halterungen (nicht dargestellt). In jedem Fall verfügt die Temperiervorrichtung 13 über einen mittelbaren oder unmittelbaren Anschluss an die Innenhaut 8 der Tierunterkunft 1, die im Ausführungsbeispiel nicht über eine doppelte Wandung 4 verfügt.

Die Figuren 6a und 6b zeigen eine weitere Ausführungsform der Tierunterkunft 1. Diese verfügt ebenfalls über eine Wandung 4 sowie eine Rückwand 18 und eine Bodenfläche 12. Im hier dargestellten Ausführungsbeispiel wurde im Unterkunftsraum 3 auf der Innenhaut 8 eine Temperiervorrichtung 13 eingebracht. Bei dieser handelt es sich um eine Infrarotheizmatte die sich von der Bodenfläche 12 bis ins untere Drittel der Wandung 4 erstreckt und an bzw. in der Wandung 4 flächig angeordnet ist. Über den rückseitig an der Tierunterkunft 1 angebrachten Anschluss 14 wird die Temperiervorrichtung 13 mit elektrischem Strom versorgt. Mit der Infrarotheizmatte wird nicht die Luft sondern das in der Tierunterkunft 1 eingestellte Tier direkt erwärmt. Im Unterschied hierzu steigt bei einer herkömmlichen Heizung die Wärme vom Heizkörper aus nach oben auf und erwärmt die Luft, die sich im oberen Bereich der Tierunterkunft 1 befindet. Die dann wieder erkaltende Luft sinkt ab und ist dann bereits kühler wenn sie auf das Tier trifft. Im Bodenbereich kann somit mit vertretbarem Heizaufwand kaum mehr eine ausreichende Erwärmung erfolgen und das dort lagernde Tier kühlt trotz Vorhandenseins einer Heizmöglichkeit aus. Die Verwendung einer Infrarotheizung, sei es die in Figuren 6a und 6b dargestellten Infrarotheizmatte die auf der Innenhaut 8 aufgebracht oder in diese eingebettet, beispielsweise eingegossen vorgesehen ist oder eine Infrarotflächenheizung, die innenseitig in der Tierunterkunft 1 angeordnet ist, beispielsweise mithilfe von in den Figuren nicht dargestellten Halterungen, die in die Wandung 4 der Tierunterkunft 1 eingebracht sind, kann verhindert werden, dass nicht die Luft erwärmt wird sondern das Material der Tierunterkunft 1 bzw. das eingestellte Tier selbst. Somit wird eine wesentlich effizientere Erwärmung des Tieres und der gesamten Tierunterkunft 1 erreicht und Wärmeverluste verhindert. Die Beheizung kann somit effizienter und energiesparender durchgeführt werden.

Im Ausführungsbeispiel der Figuren 6a und 6b erstreckt sich die Infrarotflächenheizung entlang der Seitenwände der Tierunterkunft 1. Selbstverständlich besteht auch die Möglichkeit in der Bodenfläche 12 zusätzliche Heizelemente vorzusehen. Dadurch wird eine angenehm temperierte Auflagefläche für das Tier im Unterkunftsraume geschaffen. Zusätzlich zu den hier dargestellten Heizelementen kann selbstverständlich auch im Dachbereich 17 wenigstens ein Heizelement angebracht, beispielsweise aufgehängt werden. Die Innenhaut 8 bzw. Wandung 4 der Tierunterkunft 1 kann auch mit einer oder mehreren Aufnahme(n) (nicht dargestellt) ausgestattet werden, in die die Temperiervorrichtung 13 bedarfsweise eingesetzt werden kann. Diese können taschen- oder rinnenartig in der Wandung 4 oder Innenhaut 8 der Tierunterkunft 1 eingebracht oder als Ausnehmung bei einer doppelwandigen Ausgestaltung vorgesehen werden. Die Temperiervorrichtung 13 kann bei doppelwandiger Ausgestaltung auch im Raum zwischen Außenhaut 7 und Innenhaut 8 der Tierunterkunft 1 angebracht, beispielsweise eingesteckt oder eingeschoben oder unmittelbar bei der Herstellung in diesem Zwischenraum eingefügt werden.

Die Zutrittsöffnung 2 hat im Ausführungsbeispiel eine gegenüber der lichten Höhe der Tierunterkunft 1 reduzierte Höhe und ein zusätzlicher Kragen ist an der Zutrittsöffnung 2 angesetzt.

Die Tierunterkunft 1 besteht im Ausführungsbeispiel aus einem Kunststoffmaterial, das zusätzlich durch eingelegte Fasermatten verstärkt werden kann, das in einem Gieß-, Spritz- oder Blasformverfahren verarbeitet wird, um die Tierunterkunft zu bilden. Die Verwendung von faserverstärkten Werkstoffen oder Faserverbundwerkstoffen ist ebenfalls möglich. Im Zuge des Herstellungsvorgangs können die Heizelemente der Temperiervorrichtung 13, beispielsweise die Matten, Leitungen oder Heizkörper in das Material eingebracht werden. Zusätzlich besteht auch die Möglichkeit, dass die Temperiervorrichtung 13 nachträglich in die Tierunterkunft 1 eingebracht wird. Dazu kann eine Einbettung in eine Innenbeschichtung vorgenommen werden. Selbst verständlich besteht auch die Möglichkeit die Heizelemente unmittelbar auf der Innenhaut 8 aufzukleben oder mit dieser zu verschweißen. Neben dem Anschluss 14 für das Heizmedium, im Ausführungsbeispiel elektrischer Strom, kann selbstverständlich auch eine Steuerungsvorrichtung für die Raumtemperatur bzw. Heizleistung der Temperiervorrichtung 13 vorgesehen werden. Es kann sich hierbei um eine zentrale Steuerung für mehrere, beispielsweise nebeneinander angeordnete Tierunterkünfte 1 handeln. Alternativ hierzu kann jeder Tierunterkunft 1 ein eigenes Steuerelement zugeordnet sein.

Die Erfindung ist verständlich nicht auf die Verwendung von Infrarotheizelementen beschränkt. Es besteht die Möglichkeit, dass alternativ eine Warmwasserheizung oder eine sonstige Stromheizung vorgesehen wird. Auch können mehrere gitter- oder rasterartig in die Innenhaut 8 der Tierunterkunft eingeformte, perforierte oder mit Düsen versehene Leitungen 6 vorgesehen werden, über die je nach Bedarf Kalt- oder Warmluft gleichmäßig austritt und das in der Tierunterkunft 1 lagernde Tier kühlt bzw. wärmt. Das jeweilige Medium wird dann auch über den entsprechend angepassten Anschluss zugeführt.

## Patentansprüche

1. Tierunterkunft, insbesondere Kälberiglu, mit einer einen Unterkunftsraum für wenigstens ein Tier zumindest teilweise umschließenden Wandung (4) und die Wandung (4) den Unterkunftsraum (3) kuppel- oder gewölbeartig überspannt oder umschließt und in der Wandung (4) wenigstens eine Zutrittsöffnung (2) zu dem Unterkunftsraum (3) ausgespart ist, wobei in oder an der Wandung (4) wenigstens eine Temperiervorrichtung (13) für die Tierunterkunft vorgesehen ist und die Temperiervorrichtung (13) als Infrarotstrahler, Infrarotflächenheizung, Infrarotheizmatte oder Heizstrahler ausgebildet ist, **dadurch gekennzeichnet, dass** die Temperiervorrichtung (13) auf der Wandung (4) aufgebracht, oder ganz oder teilweise in ein die Wandung (4) bildendes oder die Wandung (4) beschichtendes Material eingebettet oder eingegossen ist .

2. Tierunterkunft nach Anspruch 1, **dadurch gekennzeichnet, dass** sich die Temperiervorrichtung (13) in Längsrichtung des Unterkunftsraumes (3) erstreckt und/oder die Wandung (4) einen kuppel- oder gewölbeartigen Dachbereich (17) aufweist und die Temperiervorrichtung (13) im Dachbereich (17) angeordnet ist, wobei die Temperiervorrichtung (13) bevorzugt vollflächig oder abschnitts- bzw. bereichsweise an oder in der Wandung (4) angeordnet vorgesehen ist.

3. Tierunterkunft nach einem der vorhergehenden Ansprüche, **dadurch gekennzeichnet, dass** an oder in der Wandung (4) eine Aufnahme für die Temperiervorrichtung (13) vorgesehen ist.

4. Tierunterkunft nach einem der vorhergehenden Ansprüche, **dadurch gekennzeichnet, dass** die Wandung (4) eine Außenhaut (7) und eine dazu beabstandete Innenhaut (8) aufweist und in einem Zwischenraum (5) zwischen Außenhaut (7) und Innenhaut (8) die Temperiervorrichtung (13) angeordnet ist.

5. Tierunterkunft nach einem der vorhergehenden Ansprüche, **dadurch gekennzeichnet, dass** die Wandung (4) wenigstens eine Halterung (9) für die Anordnung der Temperiervorrichtung (13) aufweist, wobei die Halterung (9) bevorzugt in die Wandung (4) eingeformt, eingegossen in diese eingesetzt, auf dieser aufgesetzt, in dieser eingesteckt oder auf diese aufgesteckt, in dieser eingeschraubt oder auf dieses aufgeklebt vorgesehen ist.

6. Tierunterkunft nach Anspruch 5, **dadurch gekennzeichnet, dass** die Halterung (9) für eine nur bedarfsweise Anordnung der Temperiervorrichtung (13) vorgesehen ist.

7. Tierunterkunft nach einem der vorhergehenden Ansprüche, **dadurch gekennzeichnet, dass** in der Wandung (4) eine schalenartige Aufnahme für die Temperiervorrichtung (13) vorgesehen ist.

8. Tierunterkunft nach einem der vorhergehenden Ansprüche, **dadurch gekennzeichnet, dass** ein den Unterkunftsraum (3) rückseitig begrenzender, die Temperiervorrichtung (13) aufweisender Wandungsteil vorgesehen ist.

9. Tierunterkunft nach einem der vorhergehenden Ansprüche, **dadurch gekennzeichnet, dass** die Wandung (4) eine Dach- und wenigstens eine Seitenfläche der Tierunterkunft (1) ausbildet und die Temperiervorrichtung (13) in der Dach- und/oder der wenigstens einen Seitenfläche angeordnet ist.

10. Tierunterkunft nach einem der vorhergehenden Ansprüche, **gekennzeichnet durch** eine sich an die Wandung (4) anschließende oder anschließbare Bodenfläche (12), wobei in der Bodenfläche (12) bevorzugt eine Temperiervorrichtung (13) und/oder eine oder mehrere Leitungen (6) für ein Kühl- und/oder Heizmedium vorgesehen ist/sind und/oder die Bodenfläche (12) doppelwandig ausgebildet ist und/oder die Bodenfläche (12) rost- oder gitterartig ausgebildet ist.

11. Tierunterkunft nach einem der vorhergehenden Ansprüche, **gekennzeichnet durch** eine insbesondere manuell oder fernbedient einstellbare, bevorzugt automatische Temperaturregeleinrichtung.

12. Anordnung umfassend mehrere Tierunterkünfte gemäß einem der vorhergehenden Ansprüche.

13. Anordnung nach Ansprüche 12 und 10, **dadurch gekennzeichnet, dass** jeder Tierunterkunft (1) bevorzugt eine Versorgungseinheit für das Kühl- und/oder Heizmedium zugeordnet und/oder eine zentrale Versorgungseinheit für die gleichzeitige Versorgung aller Tierunterkünfte (1) mit dem Kühl- und/oder Heizmedium und/oder bevorzugt eine zentrale Temperaturregeleinrichtung vorgesehen ist.

## Claims

1. Animal shelter, in particular calf hutch, with a wall (4) enclosing at least partly a space accommodating at least one animal, and the wall (4) bridges or encloses the accommodation space (3) like a dome or an arch, and in the wall (4) at least one opening (2) accessing the accommodation space (3) is left out, wherein in or at the wall (4) at least one temperature control device (13) is provided for the animal shelter, and the temperature control device (13) is configured as infrared radiator, infrared panel heating, infrared heating mat or radiant heater, **characterized in that** the temperature control device (13) is applied to the wall (4) or embedded or molded either as a whole or partly in material forming or coating the wall (4).

2. The animal shelter according to claim 1, **characterized in that** the temperature control device (13) extends in longitudinal direction of the accommodation space (3), and/or the wall (4) has a dome- or arch-shaped roof area (17), and the temperature control device (13) is arranged in the roof area (17), wherein the temperature control device (13) is arranged at or in the wall (4) preferably covering the entire surface or parts or in sections.

3. The animal shelter according to any one of the preceding claims, **characterized in that** at or in the wall (4) a recess is provided for the temperature control device (13).

4. The animal shelter according to any one of the preceding claims, **characterized in that** the wall (4) has an outer shell (7) and an inner shell (8) spaced apart thereof, and in an interstice (5) between outer (7) and inner (8) shell the temperature control device (13) is arranged.

5. The animal shelter according to any one of the preceding claims, **characterized in that** the wall (4) has at least one holding device (9) for arranging the temperature control device (13), wherein the holding device (9) preferably is embedded, molded, put in, put on, slid in or on, screwed in or glued on the wall (4).

6. The animal shelter according to claim 5, **characterized in that** the holding device (9) is provided for an only optional arrangement of the temperature control device (13).

7. The animal shelter according to any one of the preceding claims, **characterized in that** in the wall (4) a bowl-like holding device for the temperature control device (13) is provided.

8. The animal shelter according to any one of the preceding claims, **characterized in that** a wall part is provided that delimits the accommodation space (3) on the backside and houses the temperature control device (13).

9. The animal shelter according to any one of the preceding claims, **characterized in that** the wall (4) forms a roof surface and at least one side face of the animal shelter (1), and the temperature control device (13) is arranged in the roof surface and/or the at least one side face.

10. The animal shelter according to any one of the preceding claims, **characterized by** a floor area (12) that joins or can join the wall (4), wherein in the floor area (12) preferably a temperature control device (13) and/or one or several ducts (6) for a cooling and/or heating medium is/are provided, and/or the floor area (12) is double-walled, and/or the floor area (12) is designed like a grate or grid.

11. The animal shelter according to any one of the preceding claims, **characterized by** a temperature adjustment unit that can be set in particular manually or remotely, preferably automatically.

12. Arrangement comprising several animal shelters according to any one of the preceding claims.

13. The arrangement according to claims 12 and 10, **characterized in that** preferably one supply unit for the cooling and/or heating medium is allocated to each animal shelter (1), and/or a central supply unit is provided for the synchronous supply of all animal shelters (1) with the cooling and/or heating medium, and/or preferably a central temperature adjustment unit is provided.

## Revendications

1. Abri pour animaux, en particulier un iglou pour veaux avec une paroi (4) entourant au moins partiellement un abri pour au moins un animal réalisé de façon à ce que la paroi (4) s'étend au-dessus de l'abri (3) sous forme d'une coupole ou d'une voûte et à ce que la paroi (4) comporte au moins une ouverture d'entrée (2) à l'abri (3) et à ce qu'au moins un dispositif thermique (13) de l'abri est prévu et à ce que ce dispositif thermique (13) est réalisé par un radiateur infrarouge, par un chauffage surfacique à rayons infrarouge, par un tapis de chauffage infrarouge ou par un radiateur à rayons chauffants, **caractérisé en ce que** le dispositif thermique (13) est appliqué sur la paroi ou intégré ou coulé complètement ou partiellement dans un matériau formant la paroi (4) ou couvrant la paroi (4).

2. Abri pour animaux selon la revendication 1, **caractérisé en ce que** le dispositif thermique (13) est disposé selon la direction longitudinale de l'abri (3) et/ou **en ce que** la paroi (4) comporte une zone de toit (17) sous forme de coupole ou de voûte dans laquelle est située le dispositif thermique (13) et ceci, de façon à ce que le dispositif thermique (13) couvre la surface de préférence complètement ou par sections ou par zones en étant installé sur ou dans la paroi (4).

3. Abri pour animaux selon une des revendications précédentes, **caractérisé en ce qu'un** récepteur pour le dispositif thermique (13) est prévu à l'intérieur ou sur la paroi (4).

4. Abri pour animaux selon une des revendications précédentes, **caractérisé en ce que** la paroi (4) possède une couche extérieure (7) et également à distance de celle-ci une couche intérieure (8) et **en ce que** le dispositif thermique (13) est situé au niveau de l'espace (5) entre la couche extérieure (7) et la couche intérieure (8).

5. Abri pour animaux selon une des revendications précédentes, **caractérisé en ce que** la paroi (4) comporte au moins une fixation (9) pour le dispositif thermique (13) de façon à ce que la fixation (9) est de préférence intégrée, coulée ou insérée dans la paroi (4) ou ajouté, enfichée dans ou sur la paroi (4) ou vissée dans la paroi ou collée sur la paroi (4).

6. Abri pour animaux selon la revendication 5, **caractérisé en ce que** la fixation (9) est prévue pour une utilisation limitée en cas de besoin du dispositif thermique (13).

7. Abri pour animaux selon une des revendication précédentes, **caractérisé en ce qu'un** récepteur en forme de cuvette destiné au dispositif thermique est prévu au niveau de la paroi (4).

8. Abri pour animaux selon une des revendications précédentes, **caractérisé en ce qu'un** élément de paroi limitant la partie arrière de l'abri (3) et comportant un dispositif thermique (13) est prévu.

9. Abri pour animaux selon une des revendications précédentes, **caractérisé en ce que** la paroi (4) forme une face du toit et au moins une face latérale de l'abri pour animaux (1) et **en ce que** le dispositif thermique (13) est situé dans la face du toit et/ou au moins dans cette face latérale.

10. Abri pour animaux selon une des revendication précédentes, **caractérisé par un** revêtement au sol (12) prolongeant ou pouvant prolonger la paroi (4) de façon à ce que revêtement au sol (12) comporte de préférence un dispositif thermique (13) et/ou une ou plusieurs conduite (6) pour un fluide réfrigérant et/ou chauffant et/ou en ce que le revêtement au sol (12) possède deux parois et/ou en ce que le revêtement au sol (12) possède une forme de grille.

11. Abri pour animaux selon une des revendication précédentes, **caractérisé par un** dispositif de régulation de la température pouvant de préférence être contrôlé manuellement ou à distance.

12. Ensemble comportant plusieurs abris pour animaux selon une des revendications précédentes.

13. Ensemble selon les revendications 12 et 10, **caractérisé en ce que** chacun des abris pour animaux (1) comporte sa propre unité d'alimentation pour les fluides réfrigérants et/ou chauffants et/ou **en ce qu'**une unité d'alimentation centrale existe pour l'alimentation simultanée de tous les abris pour animaux (1) en fluide réfrigérant et/ou chauffant et/ou **en ce qu'**un dispositif de contrôle central de la température est prévu.
